# EUROPEAN PATENT SPECIFICATION

(11) **EP 2 158 768 B1**
(45) Date of publication and mention of the grant of the patent: **03.05.2017**
(21) Application number: 08766216.9
(22) Date of filing: 11.06.2008
(51) Int. Cl.: H04N 13/02, H04N 13/00

(54) **SYSTEM AND METHOD FOR GENERATING AND REGENERATING 3D IMAGE FILES BASED ON 2D IMAGE MEDIA STANDARDS**
SYSTEM UND VERFAHREN ZUR ERZEUGUNG UND ERNEUERUNG VON 3D-BILDDATEIEN AUF GRUNDLAGE VON 2D-BILDMEDIENSTANDARDS
SYSTÈME ET PROCÉDÉ DE GÉNÉRATION ET DE RÉGÉNÉRATION DE FICHIERS D'IMAGES 3D SUR LA BASE DE STANDARDS DE SUPPORTS D'IMAGES 2D

(30) Priority: 12.06.2007 KR 20070057499
(43) Date of publication of application: 03.03.2010
(73) Proprietor: Samsung Electronics Co., Ltd., Suwon-si, Gyeonggi-do, 443-742 (KR)
(72) Inventor: LEE, Gun-Ill, Suwon-si Gyeonggi-do 442-742 (KR); CHOI, Kwang-Cheol, Suwon-si Gyeonggi-do 442-742 (KR); SONG, Jae-Yeon, Suwon-si Gyeonggi-do 442-742 (KR)
(74) Representative: Grünecker Patent- und Rechtsanwälte PartG mbB
(86) International application number: PCT/KR2008/003254
(87) International publication number: WO 2008/153313

(56) References cited:
- JP-A- 2003 111 101
- JP-A- 2005 026 800
- KR-A- 20050 056 070
- KR-B1- 100 716 142
- KWANGCHEOL CHOI ET AL: "Requirements for Stereoscopic MAF", 80. MPEG MEETING; 23.4.2007 - 27.4.2007; SAN JOSE; (MOTION PICTUREEXPERT GROUP OR ISO/IEC JTC1/SC29/WG11),, no. M14423, 22 April 2007 (2007-04-22), XP030043060, ISSN: 0000-0139
- "MAFs Overview", 80. MPEG MEETING;23.4.2007 - 27.4.2007; SAN JOSE; (MOTION PICTUREEXPERT GROUP OR ISO/IEC JTC1/SC29/WG11),, no. N8942, 28 April 2007 (2007-04-28), XP030015436, ISSN: 0000-0150
- JON SIRAGUSA ET AL: "General Purpose Stereoscopic Data Descriptor", INTERNET CITATION, 5 June 2000 (2000-06-05), XP002477340, Retrieved from the Internet: URL:http://www.vrex.com/developer/sterdesc .pdf [retrieved on 2008-04-18]
- "Text of ISO/IEC 14496-12/FDIS", 62. MPEG MEETING;21-10-2002 - 25-10-2002; SHANGHAI; (MOTION PICTUREEXPERT GROUP OR ISO/IEC JTC1/SC29/WG11),, no. N5295, 30 April 2003 (2003-04-30), XP030012582, ISSN: 0000-0362

## Description

### BACKGROUND OF THE INVENTION

### 1. Field of the Invention

The present invention relates to a system and a method for generating and regenerating a three dimensional (3D) image file based on two dimensional (2D) image media standards.

### 2. Description of the Related Art

Standardization of iMPEG-2, MPEG-4, MPEG-7, and MPEG-21 is in progress based on the Moving Picture Experts Group (MPEG), which is an international standardization organization regarding multimedia. As various standards have been developed, there has been a growing need for establishing one profile by combining different standard technologies. An example of an activity that has responded to this need is the MPEG-Application (MPEG-A: ISO/ICE 230000) multimedia application standardization.

Various Multimedia Application Formats (MAFs) have been developed as activities of the MPEG-A, in order to combine non-MPEG standards with typical MPEG standards so that the value of activity of a standard is higher. As such, without an effort to establish new separate standards, it is possible to establish a multimedia application format in such a manner that standard technologies, which have been previously verified, are combined with each other, and the effective value of the multimedia application format can be maximized. Currently, standardization of technologies such as Digital Audio Broadcasting MAF (DAB MAF) and Digital Multimedia Broadcasting MAF (DMB MAF) is in progress. However, standardization regarding a file format for storing 3D images is not in progress.

The latest image technology for implementing 3D images includes a technology for regenerating 3D images in only a portable terminal having a barrier Liquid Crystal Display (LCD) mounted therein. However, there are no known technologies for generating 3D images in typical portable terminals or a 3D image storing format for regeneration of 3D images.
KWANGCHEOL CHOI ET AL: "Requirements for Stereoscopic MAF", 80. MPEG MEETING; 23.4.2007 - 27.4.2007; SAN JOSE; (MOTION PICTUREEXPERT GROUP OR ISO/IEC JTC1/SC29/WG11), no. M14423, 22 April 2007, ISSN: 0000-0139 discloses requirements for stereoscopic MAF files. The paper firstly defines how stereoscopic content is created, stored and transmitted. Further, basic requirements of a stereoscopic MAF player are defined and requirements of the stereoscopic MAF content regarding support of necessary functionalities, compression codecs and content protection are specified. In addition, the paper refers to specific requirements of file formats of stereoscopic MAF and regarding the included metadata. Finally, the paper refers to a list of technologies regarding codecs and file formats and compares the proposed stereoscopic MAF to other MAFs.
"Text of ISO/IEC 14496-12/FDIS", 62. MPEG MEETING;21-10-2002 - 25-10-2002; SHANGHAI; (MOTION PICTUREEXPERT GROUP OR ISO/IEC JTC1/SC29/WG11)" no. N5295, 30 April 2003 discloses a proposed revised common text multimedia file format specification dated April 2003.

### SUMMARY

It is the object of the present invention to provide an improved system for generating 3D image files as well as a corresponding method.

This object is solved by the subject matter of the independent claims.

Preferred embodiments are defined by the dependent claims.

### BRIEF DESCRIPTION OF THE DRAWINGS

The above and other aspects, features and advantages of the present invention will be more apparent from the following detailed description taken in conjunction with the accompanying drawings, in which:
FIG.1 illustrates a conventional 2D image file storing format;
FIG. 2A illustrates a first 3D image file storing format according to the present invention;
FIG. 2B illustrates a second 3D image file storing format according to the present invention;
FIG. 2C illustrates a third 3D image file storing format according to the present invention;
FIG. 3A illustrates a first 3D image file generating device according to the present invention;
FIG. 3B illustrates a first 3D image file regenerating device according to the present invention;
FIG. 4A illustrates a second 3D image file generating device according to the present invention;
FIG. 4B illustrates a second 3D image file regenerating device according to the present invention;
FIG. 5A illustrates a third 3D image file generating device according to the present invention;
FIG. 5B illustrates a third 3D image file regenerating device according to the present invention;
FIG. 6A illustrates a fourth 3D image file generating device according to the present invention;
FIG. 6B illustrates a fourth 3D image file regenerating device according to the present invention;
FIG. 7A illustrates a method for generating a 3D image file according to the present invention; and
FIG. 7B illustrates a method for regenerating a 3D image file according to the present invention.

### DETAILED DESCRIPTION OF THE PREFERRED EMBODIMENTS

Hereinafter, preferred embodiments of the present invention will be described with reference to the accompanying drawings. In the following description, the same elements will be designated by the same reference numerals although they are shown in different drawings. Further, a detailed description of known functions and configurations incorporated herein will be omitted for the sake of clarity and conciseness.

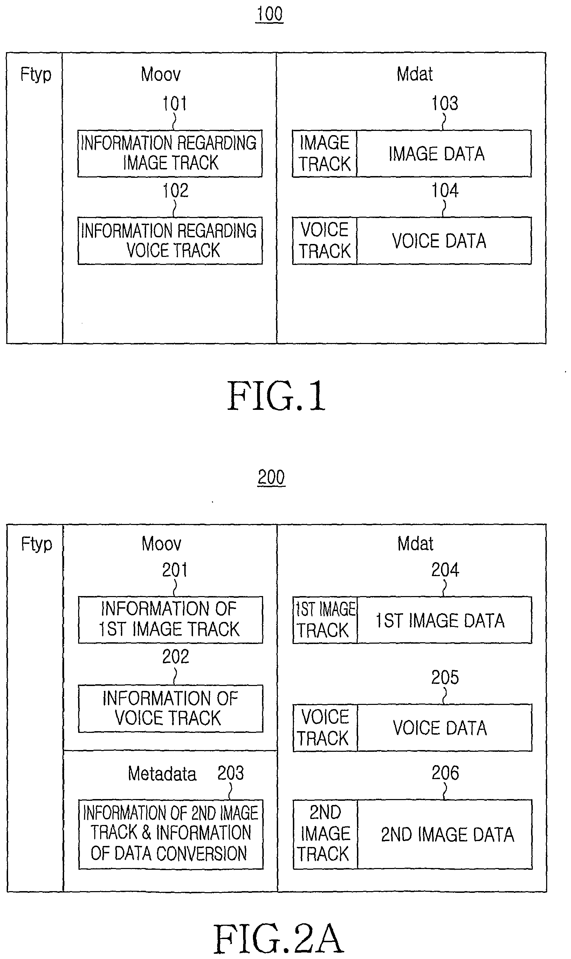

FIG. 1 illustrates a 2D image file storing format according to the conventional ISO 14496-12. The 2D image file storing format 100 includes a Moov area and an Mdat area. Herein, the Mdat area is a data area of the file format. The image track 103 includes actual image data, and a voice track 104 includes voice data. The image data and the voice data are stored in each track with a frame unit.

The Moov area corresponds to a header area of the file format and has a structure based on an object. The Moov area includes all pieces of information for regenerating files regarding contents information including a frame rate, a bit rate, the size of an image, and synchronization information for supporting a function for regenerating commands such as fast forward (FF) and rewind (REW). Particularly, image track information 101 or voice track information 102 includes information regarding the number of entire frames of image data or voice data and the size of each frame, so that image data and voice data can be reconstructed and regenerated in such a manner that the move area is parsed.

FIG. 2A illustrates a first 3D image file storing format according to the present invention. A 2D image file storing format 200 is formed in such a manner that only a metadata area is added to the 2D image file format shown in FIG. 1. Therefore, a structure and a function of the 2D image file format can be used without substantial alteration thereto. The Mdat area as a data area includes a voice track 205, a first image track 204 and a second image track 206. The first image track 204 includes first image data, and the second image track 206 includes second image data.

Herein, the first and second image data are formed by using a characteristic of the sense of sight of a human being, and are image data formed by photographing an image of the left sight point and an image of the right sight point by using the first camera and the second camera respective to a predetermined subject. As such, each separate image is generated and regenerated at the left and right eyes of the user so that the user feels a cubic effect. If one of the first and the second image data is regenerated, the user enjoys a 2D image, and if the first image data and the second image data are combined with each other to be regenerated, the user can enjoy a 3D image.
The Moov area as a header area includes information 201 regarding the first image track and information 202 regarding the voice track, and the metadata area includes information 203 regarding the second image track. Such track information includes, for example, information regarding the number of entire frames of each piece of image data or each piece of voice data, and the sizes of the frames, so that when a three-dimensional image is regenerated, each piece of data can be combined in such a manner that the information is analyzed.

The 3D image file storing format 200 further includes data conversion information 203, which relates to a method for performing a data converting process on the second image data constructed differently from a format of a conventional 2D image data in various manners so as to store it. Therefore, the data conversion information 203 is used for restoring the second image data when the three-dimensional file is regenerated. Due to such a data converting process, the amount of data of a 3D image file when a three-dimensional image file is transmitted can be reduced. The data converting process will be described below when a three-dimensional image file generating device is discussed.

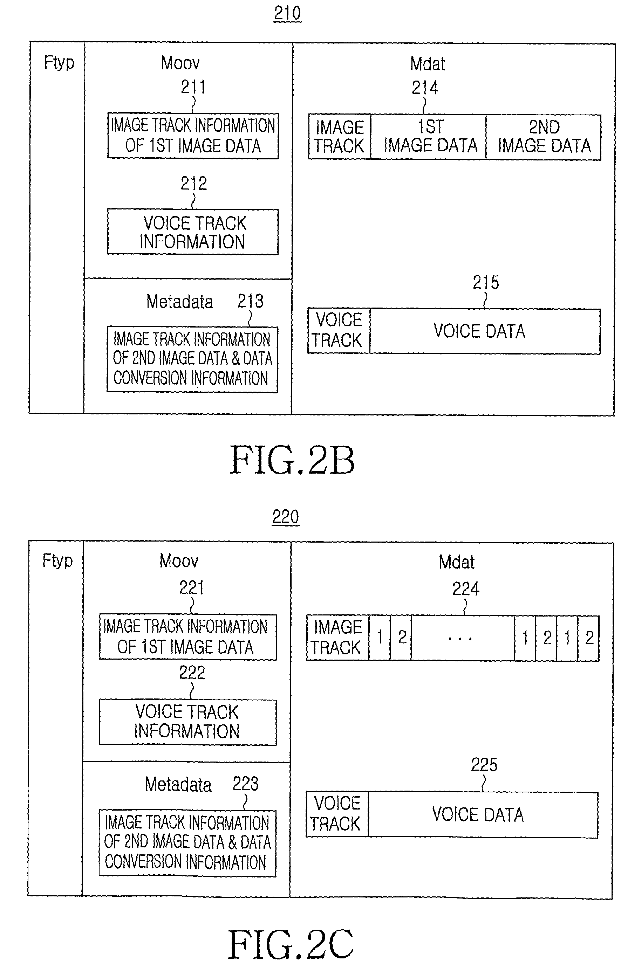

FIG. 2B illustrates a second 3D image file storing format according to the present invention. The 3D image file storing format 210 includes an Mdat area as a data area, a Moov area as a header area, and a metadata area. However, in comparison with the first 3D image file storing format 200, there is one image track 214 instead of two image tracks, and the first and second image data are included in the one image track.

According to a storing method of 3D image file storing format 210, one of the first and the second image data is first stored, and then the remaining image data is stored. Therefore, it is possible to construct image data in only one track. The Moov area has the number of entire frames of the first image data, the sizes of the frames, and image track information 211 of the first image data such as information regarding a starting address of the image track, at which the first image data has been stored. The metadata area has the number of entire frames of the second image data, the sizes of the frames, and image track information 213 of the second image data regarding a starting address at which the second image data has been stored. As such, it is possible to synthesize and regenerate the first and the second image data into a 3D image.

Herein, similar to the 3D image file storing format 200, in the 3D image file storing format 210, it is possible to perform a data converting process on the second image data in various manners and store it into the image track 214. In addition, the data conversion information 213 includes information regarding such a data converting method, and it is possible to restore the second image data when a three-dimensional image is regenerated by using the data conversion information 213. Such a data converting process also can reduce the amount of 3D image file data, which will be described below in detail.
FIG. 2C illustrates a third 3D image file storing format according to the present invention. The 3D image file storing format 220 also includes an Mdat area as a data area, a Moov area as a header area, and a metadata area. However, although the 3D image file storing format 220 also includes one image track 224, similar to the 3D image file storing format 210, the first and the second image data are alternatively stored in the one image track in comparison with the 3D image file storing format 210. Therefore, the Moov area as the header area includes the number of entire frames of the first image data, the sizes of the frames, and image track information 221 of the first image data, such as offset information until the next first image data is arranged after a first image data, as well as information regarding a starting address of the image track, at which the first image data has been stored.

The metadata area also includes the number of entire frames of the second image data, the sizes of the frames, and image track information 223 of the second image data, such as offset information until the next second image data is arranged after a second image data, as well as information regarding a starting address of the image track, at which the second image data has been stored. Herein, the 3D image file storing format 220 can perform a data converting process on the second image data, which is added, in various manners and store them.

In addition, the 3D image file storing format 220 includes the image track information 223 required for restoring the second image data, which has undergone the data converting process. In such a data converting process, the amount of data of a 3D image file can be reduced when it is transmitted. The data converting process will be described below in the description of a three-dimensional image file generating device.

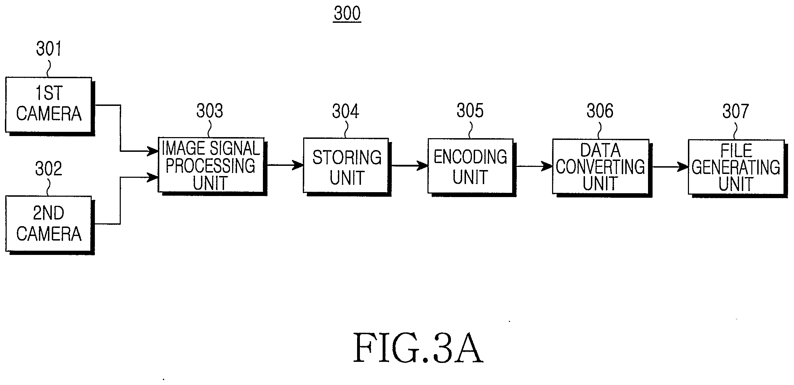

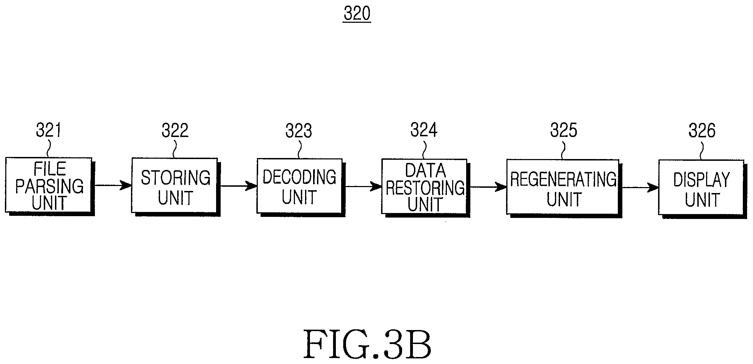

FIG. 3A illustrates a first 3D image file generating device according to the present invention. In FIG. 3, the 3D image file generating unit 300 includes a first camera 301, a second camera 302, an image signal processing unit 303, a storing unit 304, an encoding unit 305, a data converting unit 306 and a file generating unit 307.

The first camera 301 photographs an image of a left sight point or an image of a right sight point respective to a subject so as to output first image data. The second camera 302 photographs an image of another sight point, which is different from the sight point of the first camera 301, respective to the subject, so as to output second image data. The first and the second image data, which are output from the first camera 301 and the second camera 302, respectively, undergo pre-processing through the image signal processing unit 303. Herein, a pre-process operation is to convert an analogue value of an outer image value, i.e. elements of light and colors, which has recognized through a sensor in a Charge Coupled Device (CCD) type or a Complementary Metal-Oxide Semiconductor (CMOS) type, to a digital value.

The storing unit 304 stores the first and the second image data, which have undergone a pre-process through the image signal processing unit 303. Also, the encoding unit 305 encodes the stored first image data and the stored second image data. The encoding operation of the encoding unit 305 relates to data compression, and can be omitted if needed.

The data converting unit 306 has a structure for performing a data conversion process on the second image data so that the data converting unit 306 can perform a data conversion process in various manners. Such data converting unit 306 can be omitted. However, when a data convention process is performed on the second image data, a structure for restoring data conversion is required when a three-dimensional file is regenerated.

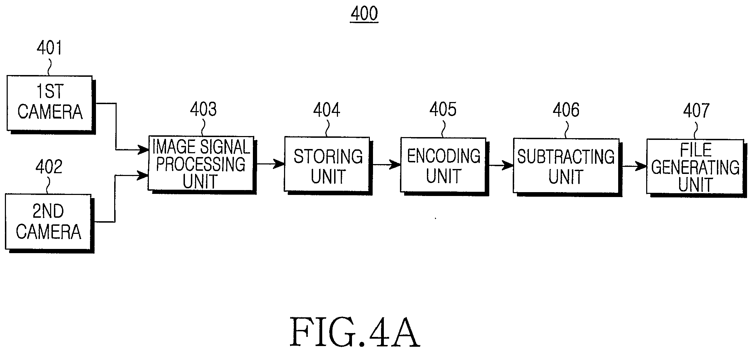

As an example of data conversion, there is a scheme for obtaining a difference between corresponding pixel values of the first and the second image data and stores it in a data area, in which the second image data will be stored, a scheme for reducing the size of the second image data with a ratio and storing it in a data area, in which the second image data will be stored, and a scheme for obtaining a distance between the first image data and the first camera 301 and a distance between the second image data and the second camera 302 and storing a difference between the distances as a data conversion value in a data area, in which the second image data will be stored. Each scheme will be described with reference to FIGs. 4a to 6b.

The file generating unit 307 generates a three- dimensional file by using the first image data encoded in the encoding unit 305 and the second image data, which has been encoded and has undergone a data conversion process. At this time, the first and the second image data are stored in the data area, track information of the first image data is stored in the header area, and track information of the second image data and information regarding a data conversion method of the second image data is stored in the metadata area. This information is utilized as useful information when a three-dimensional file is regenerated.

FIG. 3B illustrates a first 3D image file regenerating device according to the present invention. With reference to FIG. 3b, the 3D image file regenerating unit 320 includes a file parsing unit 321, a storing unit 322, a decoding unit 323, a data restoring unit 324, a regenerating unit 325 and a display unit 326.

The file parsing unit 321 receives a three-dimensional image file generated in the file generating unit 307 of the 3D image file generating device 320 so as to use it in parsing the 3D image file. At this time, the track information of the first image data and the track information of the second image data, which are stored in the header area and the metadata area, respectively, are parsed so that the stored first and the second image data are extracted and stored in the storing unit 322. The decoding unit 323 decodes the first and the second image data. This operation is performed when they have been encoded through the encoding unit 305 in the 3D image file generating unit 320.

Meanwhile, the data restoring unit 324 is a corresponding structure when the data converting unit 306 is used in the 3D image file generating unit 320 and is added to the 3D image file regenerating unit 320. The data restoring unit 324 finds a data converting scheme performed on the second image data, based on data conversion information stored in the metadata area of a three-dimensional file at the file encoding unit 305, and restores the second image data in a reverse manner. The regenerating unit 325 synthesizes the first image data, which has been decoded, and the second image data, which has been restored after decoding, into a three-dimensional image so as to regenerate them. At this time, track information stored in the header area and the metadata area of the 3D image file is used for the synthesis

Herein, when the regenerating unit 325 does not refer to the track information of the second image data, which is stored in the metadata area, only first image data is regenerated so that a typical 2D image is regenerated. Also, although a typical regenerating device, which can not regenerate a 3D image, receives a 3D image file, it is enough to refer only a Moov area according to a conventional standard, and not the metadata area, so that it is possible to regenerate a 2D image. As such, the 3D image file storing format according to the present invention has compatibility respective to regeneration of a conventional 2D image and a 3D image. The display unit 326 displays a three-dimensional image, which is synthesized and regenerated in the regenerating unit 325.

With reference to FIGs. 4A to 6B, various embodiments of the data converting unit 306 and the data restoring unit 324, which are mentioned in FIGs. 3A and 3B, will be described below.

With reference to FIG. 4A, a 3D file generating unit 400 includes a first camera 401, a second camera 402, an image signal processing unit 403, a storing unit 404, an encoding unit 405, a subtracting unit 406, and a file generating unit 407. Herein, the 3D file generating unit 400 employs a subtracting unit 406 as an example of the data converting unit 306 and descriptions of the remaining unites are equal to descriptions of those of the 3D image file generating unit 320 in FIG. 3A. Therefore, the descriptions are omitted for the sake of conciseness.

The subtracting unit 406 outputs a value obtained by subtracting each pixel of the second image data from each pixel value of the first image data. The value is set as a conversion value of the second image data and is stored in a data area in which the second image data will be stored. The subtracting unit 406 corresponds to an adding unit 424 of the 3D file regenerating device 420.

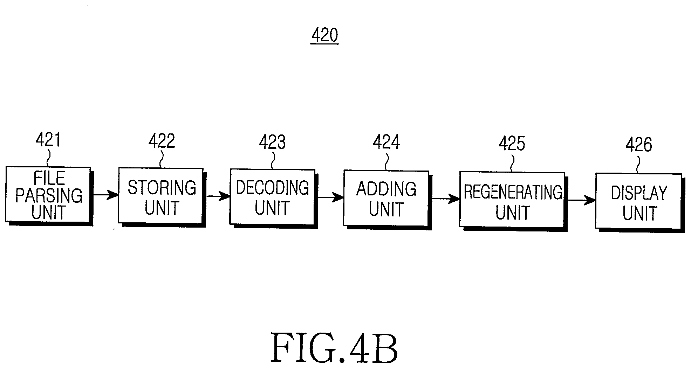

With reference to FIG. 4B, the 3D file regenerating device 420 includes a file parsing unit 421, a storing unit 422, a decoding unit 423, an adding unit 424, a regenerating unit 425 and a display unit 426. Herein, the 3D file regenerating device 420 employs the adding unit 424 as an example of the data restoring unit 324, and descriptions of the remaining units are of the same as those of the 3D image file generating unit 320 in FIG. 3B. As such, the descriptions are omitted here for the sake of conciseness.

The adding unit 424 is used for restoring the second image data converted by the subtracting unit 406 to an original value. The adding unit 424 can add the value obtained by the subtracting unit 406 and the first image data to each other so as to restore the second image data as an original value.

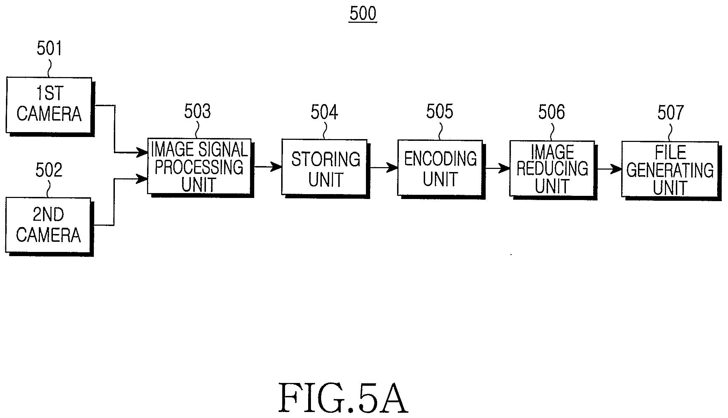

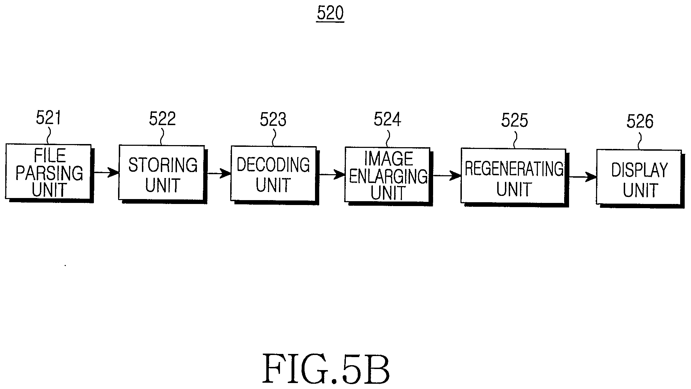

With reference to FIG. 5A, the 3D file generating device 500 includes a first camera 501, a second camera 502, an image signal processing unit 503, a storing unit 504, an encoding unit 505, an image reducing unit 506 and a file generating unit 507. Herein, the 3D file generating device 500 employs the image reducing unit 506 as an example of the data converting unit 306, and descriptions of the remaining units are of the same as those of the 3D image file generating unit 320 in FIG. 3a. As such, the descriptions are omitted here for the sake of conciseness. The image reducing unit 506 reduces the amount of a pixel value with a ratio of ½ or 1/4, for example. The image reducing unit 506 corresponds to the image enlarging unit 524 of the 3D file regenerating device 520 shown in FIG. 5B.

With reference to FIG. 5B, the 3D file regenerating device 520 includes a file parsing unit 521, a storing unit 522, a decoding unit 523, an image enlarging unit 524, a regenerating unit 525 and a display unit 526. Herein, the 3D file regenerating device 520 employs the image enlarging unit 524 as an example of the data restoring unit 324, and descriptions of the remaining units are the same as those of the 3D image file generating unit 320 in FIG. 3b. As such, the descriptions are omitted here for the sake of conciseness. The image enlarging unit 524 restores the second image data reduced by the image reducing unit 506 in such a manner that the second image data is enlarged to be original one.

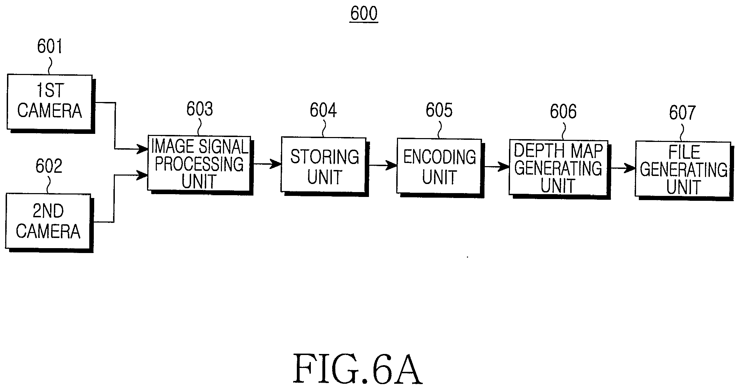

With reference to FIG. 6A, the 3D file generating device 600 includes a first camera 601, a second camera 602, an image signal processing unit 603, a storing unit 604, an encoding unit 605, a depth map generating unit 606 and a file generating unit 607. Herein, the 3D file regenerating device 520 employs the image enlarging unit 524 as an example of the data restoring unit 324, and descriptions of the remaining unites are of the same as those of the 3D image file generating unit 320 in FIG. 3B. As such, the descriptions are omitted here for the sake of conciseness. The depth map generating unit 606 generates a depth map showing a distance between each pixel value of the first image data and the first camera 601 and a distance between each pixel value of the second image data and the second camera 602 as a numerical value. Such depth map information can be stored in the data area as a conversion value of the second image data. The depth map generating unit 606 corresponds to a depth map analyzing unit 624 of a 3D image file generating device 620.

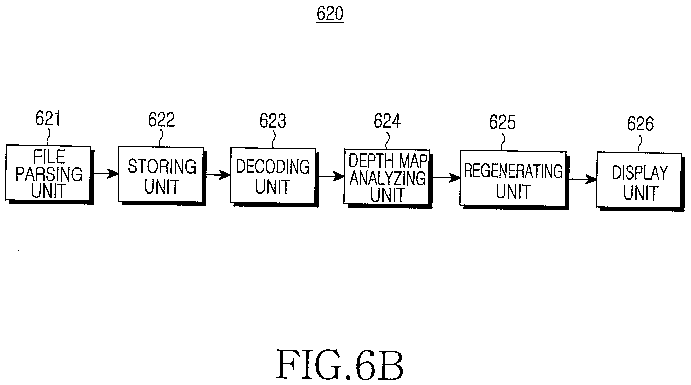

With reference to FIG. 6B, the 3D image file generating device 620 includes a file parsing unit 621, a storing unit 622, a decoding unit 623, a depth map analyzing unit 624, a regenerating unit 625 and a display unit 626. Herein, the depth map analyzing unit 624 is employed as an example of the data restoring unit 324, and descriptions of the remaining units are the same as those of the 3D image file generating unit 320 in FIG. 3B. As such, the descriptions are omitted here for the sake of conciseness. The depth map analyzing unit 624 restores an algorithm used in the depth map generating unit 606 in a reverse manner.

Next, a method for generating and regenerating a 3D image file by using 3D image file formats 200, 210, and 220 will be described.

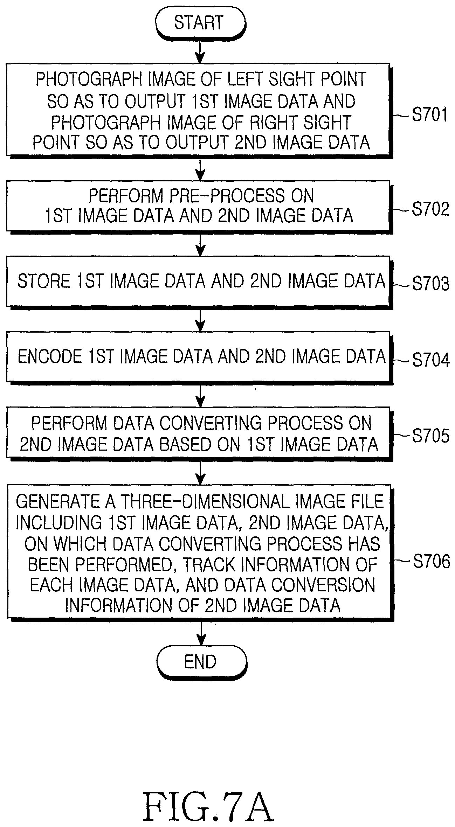

FIG. 7a illustrates a method for generating a 3D image file according to one embodiment of the present invention. With reference to FIG. 7A, the 3D image file generating method includes a photographing step S701, a pre-processing step S702, a storing step S703, and an encoding step S704, a data converting step S705 and a file generating step S706. In the photographing step S701, a subject is photographed at a left sight point or a right sight point by using a first camera or a second camera. In the pre-processing step S702, pre-processing is performed on the first image data and the second image data, which are outputted in the photographing step S701, and an analogue value obtained through an image sensor is converted to a digital value.

The first and the second image data, which have undergone the pre-process, are stored in the storing step S703. The first and the second image data are encoded in the encoding step S704. The encoding step S704 can be omitted. The data converting step S705 is for performing a data conversion on the second image data for a three-dimensional image. The second image data is converted by subtracting the second image data from the first image data, reducing the second image data, or generating a depth map. The file generating step S706 is for generating a three-dimensional image file by using the first and the second image data undergoing the data conversion process. The three-dimensional file can use a format mentioned in FIGs. 2A to 2C.

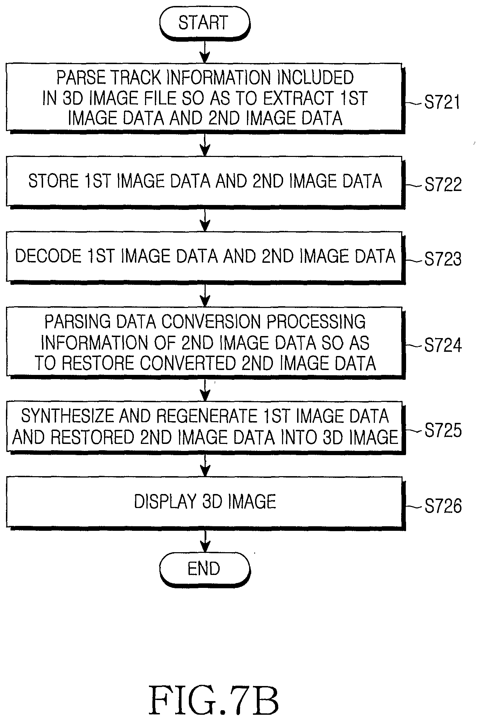

FIG. 7B illustrates a method for regenerating a 3D image file according to the present invention. In FIG. 7B, a 3D image file regenerating method includes an image extracting step S721, a storing step S722, a decoding step S723, a data restoring step S724, a regenerating step S725 and a displaying step S726. The image extracting step S 721 is for parsing a 3D image file generated in the file generating step S706 and extracting the first image data and the second image data. The extracted first and the second image data are stored in the storing step S722. The decoding step S723 is performed only when the first and the second image data have been encoded in the encoding step S704, and is a step for decoding them into an identical algorithm.

The data restoring step S724 corresponds to the data converting step S705, and is added only when image data has undergone the data converting step S705. While corresponding to a data conversion process performed in the data converting step S705, the second image data is restored in the data restoring step S724. The regenerating step S725 utilizes track information regarding the first image data, which has been decoded, and the second image data, which has been restored after decoding so as to synthesize each pixel, thereby regenerating a 3D image. The display step S726 is for displaying a regenerated 3D image.

As described above, according to the present invention, a verification process as a new standard can be simplified by using a standard technique, which has been already verified, in a regulation of a 3D image file format. There is also an advantage in that one of a 2D image file or a 3D image file is selected so as to be generated or regenerated by a new 3D image file format.

Particularly, newly added image data is converted into various types and is stored in the 3D image file format so that the amount of image data, which is stored and transmitted, can be minimized.

## Claims

1. A system for generating and regenerating a three-dimensional, 3D, image file based on two-dimensional, 2D, image media standards, the system comprising:
a 3D image file generating device (300) for generating a 3D image file, the 3D image file including a data area having a first image data and a second image data, the second image data being synchronized with the first image data so as to be used for generating a 3D image and performing a data conversion process on the second image data based on the first image data, the data conversion process obtaining a difference between corresponding pixel values of the first and the second image data, so that the amount of image data can be minimized, a header area including information of the first image data, and a metadata area including information of the second image data; and
a 3D image file regenerating device (320), which parses information of the first image data and information of the second image data when a 3D image file is inputted so as to extract the first image data and the second image data, restores the second image data through a data conversion process by using data conversion information stored in the metadata area, and synthesizes the first image data and the restored second image data so as to regenerate the 3D image file, and wherein a regenerating device which can not regenerate a 3D image refers to the header area and not to the metadata area in order to regenerate a conventional 2D image.

2. The system claimed in claim 1, wherein the 3D image file regenerating device (320) extracts the first image data in such a manner that information of the second image data is not parsed, but only information of the first image data is parsed so that the 3D image file regenerating device regenerates a 2D image.

3. The system as claimed in claim 1 or 2, wherein the information of the first image data includes information regarding a track (204) within the data area of the first image data.

4. The system as claimed in claim 1 or 2, wherein the information of the second image data includes information regarding a track (206) within the data area of the second image data and information regarding the data conversion.

5. The system as claimed in claim 3, wherein the 3D image file regenerating device (320) extracts the first image data by using the information regarding the track (204) within the data area of the first image data.

6. The system as claimed in claim 4, wherein the 3D image file regenerating device (320) extracts the second image data by using the information regarding the track (206) within the data area of the second image data and restores the second image data by using the information regarding the data conversion.

7. The system as claimed in claim 1, wherein the 3D image file generating device (300) further comprises:
a first camera (301) for photographing an image of a left sight point respective to a subject so as to output the first image data;
a second camera (302) for photographing an image of a right sight point respective to the subject so as to output the second image data;
an image signal processing unit (303) for performing a pre-process on the first image data and the second image data which are outputted by the first camera and the second camera, respectively;
a storing unit (304) for storing the first image data and the second image data which have undergone the pre-process;
an encoding unit (305) for encoding the stored first image data and the stored second image data;
a data converting unit (306) for performing a data conversion on the encoded second image data based on the encoded first image data; and
a generating unit (307) for generating the 3D image file by using the first image data and the second image data that have undergone the data conversion process.

8. The system as claimed in claim 1, wherein the 3D image file regenerating device (320) comprises:
a file parsing unit (321) for parsing information of the first image data and information of the second image data so as to extract the first image data and the second image data;
a storing unit (322) for storing the extracted first image data and the extracted second image data;
a decoding unit (323) for decoding the stored first image data and stored second image data;
a data restoring unit (324) for restoring the decoded second image data by using the information of the second image data;
a regenerating unit (325) for synthesizing and regenerating a 3D image by using the first image data and the restored second image data;
a display unit (326) for displaying the synthesized and regenerated 3D image.

9. The system as claimed in claim 7, wherein the data converting unit (306) is a subtracting unit for converting a difference between the first image data and the second image data to the second image data.

10. The system as claimed in claim 8, wherein the data restoring unit (324) corresponds to a subtracting unit for converting a difference between the first image data and the second image data to the second image data, and is an adding unit for restoring the second image data in such a manner that a difference between the first image data and the second image data is added to the first image data.

11. The system as claimed in claim 7, wherein the data converting unit (306) is an image reducing unit for converting a value, which is obtained by reducing the second image data with a ratio, to the second image data.

12. A system as claimed in claim 8, wherein the data restoring unit (324) corresponds to an image reducing unit for converting a value, which is obtained by reducing the second image data with a ratio, to the second image data, and is an image enlarging unit for restoring the second image data in such a manner that the second image data is again enlarged with a ratio used in the image reducing unit.

13. The system as claimed in claim 7, where the data converting unit (306) is a depth map generating unit for converting a depth map, which shows a difference between a distance from the first camera to the first image data and a distance from the second camera to the second image data as a numerical value, to the second image data.

14. A method for generating and regenerating a three-dimensional, 3D, image file based on two-dimensional, 2D, image media standards, the method comprising the steps of:
photographing (S701) an image of a left sight point respective to a subject so as to output a first image data, and photographing an image of a right sight point respective to the subject so as to output a second image data;
performing (S702) a pre-process on the first image data and the second image data;
storing (S703) the pre-processed first image data and second image data;
encoding (S704) the stored first image data and stored second image data;
performing (S705) a data converting process on the encoded second image data based on the encoded first image data, the data converting process obtaining a difference between corresponding pixel values of the first and the second image data, so that the amount of image data can be minimized;
generating (S706) a three-dimensional image file consisting of a data area including the first image data and the second image data, which has undergone the data converting process, a header area including information of the first image data, and a metadata area including information of the second image data, wherein the second image data is restored through a data conversion process by using data conversion information stored in the metadata area, and wherein a regenerating device which can not regenerate a 3D image refers to the header area and not to the metadata area in order to regenerate a conventional 2D image.

15. The method as claimed in claim 14, further comprising:
parsing (S71) the information of the first image data and the information of the second image data so as to extract the first image data and the second image data;
storing (S722) the extracted first image data and the extracted second image data;
decoding (S723) the stored first image data and the stored second image data;
restoring (S724) the decoded second image data by using information regarding data conversion:
synthesizing and regenerating (S725) the first image data and the restored second image data as a three-dimensional image; and
displaying (S726) the synthesized and regenerated three-dimensional image.

## Patentansprüche

1. System zur Erzeugung und Erneuerung einer dreidimensionalen, 3D, Bilddatei auf der Basis zweidimensionaler, 2D, Bildmedienstandards, wobei das System umfasst:
eine 3D-Bilddateierzeugungsvorrichtung (300) zur Erzeugung einer 3D-Bilddatei, wobei die 3D-Bilddatei einen Datenbereich mit ersten Bilddaten und zweiten Bilddaten, wobei die zweiten Bilddaten mit den ersten Bilddaten synchronisiert werden, so dass sie zur Erzeugung eines 3D-Bildes und zur Durchführung eines Datenumwandlungsprozesses an den zweiten Bilddaten basierend auf den ersten Bilddaten verwendet werden, wobei mit dem Datenumwandlungsprozess eine Differenz zwischen entsprechenden Pixelwerten der ersten und der zweiten Bilddaten erlangt wird, so dass die Menge von Bilddaten minimiert werden kann; einen Header-Bereich mit Informationen der ersten Bilddaten und einen Metadatenbereich mit Informationen der zweiten Bilddaten umfasst; und
eine 3D-Bilddateierneuerungsvorrichtung (320), die an Informationen der ersten Bilddaten und Informationen der zweiten Bilddaten eine Syntaxanalyse vornimmt, wenn eine 3D-Bilddatei eingegeben wird, um die ersten Bilddaten und die zweiten Bilddaten zu extrahieren, die zweiten Bilddaten durch einen Datenumwandlungsprozess unter Verwendung von in dem Metadatenbereich gespeicherten Datenumwandlungsinformationen wiederherstellt und die ersten Bilddaten und die wiederhergestellten zweiten Bilddaten zusammensetzt, um die 3D-Bilddatei zu erneuern, und wobei eine Erneuerungsvorrichtung, die kein 3D-Bild regenerieren kann, Bezug auf den Header-Bereich nimmt und nicht auf den Metadatenbereich, um ein konventionelles 2D-Bild zu erneuern.

2. System nach Anspruch 1, wobei die 3D-Bilddateierneuerungsvorrichtung (320) die ersten Bilddaten extrahiert, derart, dass an Informationen der zweiten Bilddaten keine Syntaxanalyse vorgenommen wird, sondern nur an Informationen der ersten Bilddaten Syntaxanalyse vorgenommen wird, so dass die 3D-Bilddateierneuerungsvorrichtung ein 2D-Bild erneuert.

3. System nach Anspruch 1 oder 2, wobei die Informationen der ersten Bilddaten Informationen einschließen, die eine Spur (204) innerhalb des Datenbereichs der ersten Bilddaten betreffen.

4. System nach Anspruch 1 oder 2, wobei die Informationen der zweiten Bilddaten Informationen einschließen, die eine Spur (206) innerhalb des Datenbereichs der zweiten Bilddaten und die Datenumwandlung betreffende Informationen umfassen.

5. System nach Anspruch 3, wobei die 3D-Bilddateierneuerungsvorrichtung (320) die ersten Bilddaten unter Verwendung der die Spur (204) innerhalb des Datenbereichs der ersten Bilddaten betreffenden Informationen extrahiert.

6. System nach Anspruch 4, wobei die 3D-Bilddateierneuerungsvorrichtung (320) die zweiten Bilddaten unter Verwendung der die Spur (206) betreffenden Informationen innerhalb des Datenbereichs der zweiten Bilddaten extrahiert und die zweiten Bilddaten unter Verwendung der die Datenumwandlung betreffenden Informationen wiederherstellt.

7. System nach Anspruch 1, wobei die 3D-Bilddateierzeugungsvorrichtung (300) des Weiteren umfasst:
eine erste Kamera (301) zum Fotografieren eines Bildes eines linken Sichtpunkts, jeweils für ein Objekt zur Ausgabe der ersten Bilddaten;
eine zweite Kamera (302) zum Fotografieren eines Bildes eines rechten Sichtpunkts jeweils für das Objekt zur Ausgabe der zweiten Bilddaten;
eine Bildsignalverarbeitungseinheit (303) zum Durchführen einer Vorverarbeitung an den ersten Bilddaten und den zweiten Bilddaten, die durch die erste Kamera bzw. die zweite Kamera ausgegeben werden;
eine Speichereinheit (304) zum Speichern der ersten Bilddaten und der zweiten Bilddaten, welche die Vorverarbeitung durchgemacht haben;
eine Kodiereinheit (305) zum Kodieren der gespeicherten ersten Bilddaten und der gespeicherten zweiten Bilddaten;
eine Datenumwandlungseinheit (306) zum Durchführen einer Datenumwandlung an den kodierten zweiten Bilddaten auf der Basis der kodierten ersten Bilddaten; und
eine Erzeugungseinheit (307) zum Erzeugen der 3D-Bilddatei unter Verwendung der ersten Bilddaten und der zweiten Bilddaten, die den Datenumwandlungsprozess durchgemacht haben.

8. System nach Anspruch 1, wobei die 3D-Bilddateierneuerungsvorrichtung (320) umfasst:
eine Dateianalyseneinheit (321) zur Durchführung einer Syntaxanalyse an Informationen der ersten Bilddaten und Informationen der zweiten Bilddaten, um die ersten Bilddaten und die zweiten Bilddaten zu extrahieren;
eine Speichereinheit (322) zum Speichern der extrahierten ersten Bilddaten und der extrahierten zweiten Bilddaten;
eine Dekodiereinheit (323) zum Dekodieren der gespeicherten ersten Bilddaten und gespeicherten zweiten Bilddaten;
eine Datenwiederherstelleinheit (324) zum Wiederherstellen der dekodierten zweiten Bilddaten unter Verwendung der Informationen der zweiten Bilddaten;
eine Erneuerungseinheit (325) zum Zusammensetzen und Erneuern eines 3D-Bildes unter Verwendung der ersten Bilddaten und der wiederhergestellten zweiten Bilddaten;
eine Anzeigeeinheit (326) zum Anzeigen des zusammengesetzten und erneuerten 3D-Bildes.

9. System nach Anspruch 7, wobei die Datenumwandlungseinheit (306) eine Subtrahiereinheit zur Umwandlung einer Differenz zwischen den ersten Bilddaten und den zweiten Bilddaten zu den zweiten Bilddaten ist.

10. System nach Anspruch 8, wobei die Datenwiederherstelleinheit (324) einer Substrahiereinheit zur Umwandlung einer Differenz zwischen den ersten Bilddaten und den zweiten Bilddaten zu den zweiten Bilddaten entspricht, und eine Addiereinheit zur Wiederherstellung der zweiten Bilddaten ist, derart, dass eine Differenz zwischen den ersten Bilddaten und den zweiten Bilddaten zu den ersten Bilddaten addiert wird.

11. System nach Anspruch 7, wobei die Datenumwandlungseinheit (306) eine Bildreduziereinheit ist zur Umwandlung eines Wertes, der durch Reduzierung der zweiten Bilddaten mit einem Verhältnis erreicht wird, zu den zweiten Bilddaten.

12. System nach Anspruch 8, wobei die Datenwiederherstelleinheit (324) einer Bildreduziereinheit entspricht zur Umwandlung eines Wertes, der erhalten wird durch Reduzieren der zweiten Bilddaten mit einem Verhältnis zu den zweiten Bilddaten; und eine Bildvergrößerungseinheit ist zur Wiederherstellung der zweiten Bilddaten, derart, dass die zweiten Bilddaten mit einem in der Bildreduziereinheit verwendeten Verhältnis erneut vergrößert werden.

13. System nach Anspruch 7, wobei die Datenumwandlungseinheit (306) eine Tiefenbilderzeugungseinheit ist zur Umwandlung eines Tiefenbildes, welches eine Differenz zwischen einem Abstand von der ersten Kamera zu den ersten Bilddaten und einem Abstand von der zweiten Kamera zu den zweiten Bilddaten als einen numerischen Wert darstellt, zu den zweiten Bilddaten.

14. Verfahren zur Erzeugung und Erneuerung einer dreidimensionalen, 3D, Bilddatei auf der Basis zweidimensionaler, 2D, Bildmedienstandards, wobei das Verfahren die folgenden Schritte umfasst:
Fotografieren (S701) eines Bildes eines linken Sichtpunkts jeweils für ein Objekt, um erste Bilddaten auszugeben, und Fotografieren eines Bildes eines rechten Sichtpunkts jeweils für ein Objekt, um zweite Bilddaten auszugeben;
Durchführen (S702) einer Vorverarbeitung an den ersten Bilddaten und den zweiten Bilddaten;
Speichern (703) der vorverarbeiteten ersten Bilddaten und zweiten Bilddaten;
Kodieren (S704) der gespeicherten ersten Bilddaten und gespeicherten zweiten Bilddaten;
Durchführen (S705) eines Datenumwandlungsprozesses an den kodierten zweiten Bilddaten auf der Basis der kodierten ersten Bilddaten, wobei mit dem Datenumwandlungsprozess eine Differenz zwischen entsprechenden Pixelwerten der ersten und zweiten Bilddaten erlangt wird, so dass die Größe von Bilddaten minimiert werden kann;
Erzeugen (S706) einer dreidimensionalen Bilddatei, die aus einem Datenbereich einschließlich der ersten Bilddaten und der zweiten Bilddaten besteht, die den Datenumwandlungsprozess durchgemacht hat, einen Header-Bereich einschließlich Informationen der ersten Bilddaten und einen Metadatenbereich einschließlich Informationen der zweiten Bilddaten, wobei die zweiten Bilddaten durch einen Datenumwandlungsprozess unter Verwendung von in dem Metadatenbereich gespeicherten Datenumwandlungsinformationen wiederhergestellt werden, und wobei eine Erneuerungsvorrichtung, die kein 3D-Bild erneuern kann, Bezug auf den Header-Bereich nimmt und nicht auf den Metadatenbereich, um ein konventionelles 2D-Bild zu erneuern.

15. Verfahren nach Anspruch 14, des Weiteren umfassend:
Syntaxanalyse vornehmen (S71) an den Informationen der ersten Bilddaten und den Informationen der zweiten Bilddaten, um die ersten Bilddaten und die zweiten Bilddaten zu extrahieren;
Speichern (S722) der extrahierten ersten Bilddaten und der extrahierten zweiten Bilddaten;
Dekodieren (S723) der gespeicherten ersten Bilddaten und der gespeicherten zweiten Bilddaten;
Wiederherstellen (S724) der dekodierten zweiten Bilddaten unter Verwendung von Datenumwandlung betreffenden Informationen;
Zusammensetzen und Erneuern (S725) der ersten Bilddaten und der wiederhergestellten zweiten Bilddaten als ein dreidimensionales Bild; und
Anzeigen (S726) des zusammengesetzten und erneuerten dreidimensionalen Bildes.

## Revendications

1. Système destiné à générer et régénérer un fichier d'image tridimensionnelle, 3D, sur la base de normes de supports d'image bidimensionnelle, 2D, le système comprenant :
un dispositif de génération de fichier d'image 3D (300) pour générer un fichier d'image 3D, le fichier d'image 3D comportant une zone de données ayant des premières données d'image et des deuxièmes données d'image, les deuxièmes données d'image étant synchronisées avec les premières données d'image de manière à être utilisées pour générer une image 3D et effectuer un processus de conversion de données sur les deuxièmes données d'image sur la base des premières données d'image, le processus de conversion de données permettant d'obtenir une différence entre des valeurs de pixels correspondants des premières et des deuxièmes données d'image, de telle sorte que la quantité de données d'image peut être minimisée, une zone d'en-tête comportant des informations sur les premières données d'image, et une zone de métadonnées comportant des informations sur les deuxièmes données d'image ; et
un dispositif de régénération de fichier d'image 3D (320), qui analyse les informations sur les premières données d'image et les informations sur les deuxièmes données d'image quand un fichier d'image 3D est entré de manière à extraire les premières données d'image et les deuxièmes données d'image, restaure les deuxièmes données d'image par un processus de conversion de données en utilisant des informations de conversion de données stockées dans la zone de métadonnées, et synthétise les premières données d'image et les deuxièmes données d'image restaurées de manière à régénérer le fichier d'image 3D, et dans lequel un dispositif de régénération qui ne peut pas régénérer une image 3D se réfère à la zone d'en-tête et non à la zone de métadonnées afin de régénérer une image 2D conventionnelle.

2. Système selon la revendication 1, dans lequel le dispositif de régénération de fichier d'image 3D (320) extrait les premières données d'image de manière à ce que les informations sur les deuxièmes données d'image ne soient pas analysées, mais seules les informations sur les premières données d'image sont analysées de telle sorte que le dispositif de régénération de fichier d'image 3D régénère une image 2D.

3. Système selon la revendication 1 ou 2, dans lequel les informations sur les premières données d'image comportent des informations concernant une piste (204) à l'intérieur de la zone de données des premières données d'image.

4. Système selon la revendication 1 ou 2, dans lequel les informations sur les deuxièmes données d'image comportent des informations concernant une piste (206) à l'intérieur de la zone de données des deuxièmes données d'image et des informations concernant la conversion de données.

5. Système selon la revendication 3, dans lequel le dispositif de régénération de fichier d'image 3D (320) extrait les premières données d'image en utilisant les informations concernant la piste (204) à l'intérieur de la zone de données des premières données d'image.

6. Système selon la revendication 4, dans lequel le dispositif de régénération de fichier d'image 3D (320) extrait les deuxièmes données d'image en utilisant les informations concernant la piste (206) à l'intérieur de la zone de données des deuxièmes données d'image et restaure les deuxièmes données d'image en utilisant les informations concernant la conversion de données.

7. Système selon la revendication 1, dans lequel le dispositif de génération de fichier d'image 3D (300) comprend en outre :
un premier appareil photographique (301) pour photographier une image d'un point de visée gauche par rapport à un sujet de manière à produire les premières données d'image ;
un deuxième appareil photographique (302) pour photographier une image d'un point de visée droit par rapport au sujet de manière à produire les deuxièmes données d'image ;
une unité de traitement du signal d'image (303) pour effectuer un prétraitement sur les premières données d'image et les deuxièmes données d'image qui sont produites par le premier appareil photographique et le deuxième appareil photographique, respectivement ;
une unité de stockage (304) pour stocker les premières données d'image et les deuxièmes données d'image qui ont subi le prétraitement ;
une unité de codage (305) pour coder les premières données d'image stockées et les deuxièmes données d'image stockées ;
une unité de conversion de données (306) pour effectuer une conversion de données sur les deuxièmes données d'image codées sur la base des premières données d'image codées ; et
une unité de génération (307) pour générer le fichier d'image 3D en utilisant les premières données d'image et les deuxièmes données d'image qui ont subi le processus de conversion de données.

8. Système selon la revendication 1, dans lequel le dispositif de régénération de fichier d'image 3D (320) comprend :
une unité d'analyse de fichier (321) pour analyser les informations sur les premières données d'image et les informations sur les deuxièmes données d'image de manière à extraire les premières données d'image et les deuxièmes données d'image ;
une unité de stockage (322) pour stocker les premières données d'image extraites et les deuxièmes données d'image extraites ;
une unité de décodage (323) pour décoder les premières données d'image stockées et les deuxièmes données d'image stockées ;
une unité de restauration de données (324) pour restaurer les deuxièmes données d'image décodées en utilisant les informations sur les deuxièmes données d'image ;
une unité de régénération (325) pour synthétiser et régénérer une image 3D en utilisant les premières données d'image et les deuxièmes données d'image restaurées ;
une unité d'affichage (326) pour afficher l'image 3D synthétisée et régénérée.

9. Système selon la revendication 7, dans lequel l'unité de conversion de données (306) est une unité de soustraction pour convertir une différence entre les premières données d'image et les deuxièmes données d'image en deuxièmes données d'image.

10. Système selon la revendication 8, dans lequel l'unité de restauration de données (324) correspond à une unité de soustraction pour convertir une différence entre les premières données d'image et les deuxièmes données d'image en deuxièmes données d'image, et est une unité d'addition pour restaurer les deuxièmes données d'image de manière à ce qu'une différence entre les premières données d'image et les deuxièmes données d'image soit ajoutée aux premières données d'image.

11. Système selon la revendication 7, dans lequel l'unité de conversion de données (306) est une unité de réduction d'image pour convertir une valeur, qui est obtenue en réduisant les deuxièmes données d'image avec un rapport, en deuxièmes données d'image.

12. Système selon la revendication 8, dans lequel l'unité de restauration de données (324) correspond à une unité de réduction d'image pour convertir une valeur, qui est obtenue en réduisant les deuxièmes données d'image avec un rapport, en deuxièmes données d'image, et est une unité d'agrandissement d'image pour restaurer les deuxièmes données d'image de manière à ce que les deuxièmes données d'image soient de nouveau agrandies avec un rapport utilisé dans l'unité de réduction d'image.

13. Système selon la revendication 7, dans lequel l'unité de conversion de données (306) est une unité de génération de carte de profondeur pour convertir une carte de profondeur, qui montre une différence entre une distance du premier appareil photographique aux premières données d'image et une distance du deuxième appareil photographique aux deuxièmes données d'image sous la forme d'une valeur numérique, en deuxièmes données d'image.

14. Procédé destiné à générer et régénérer un fichier d'image tridimensionnelle, 3D, sur la base de normes de supports d'image bidimensionnelle, 2D, le procédé comprenant les étapes consistant à :
photographier (S701) une image d'un point de visée gauche par rapport à un sujet de manière à produire des premières données d'image, et photographier une image d'un point de visée droit par rapport au sujet de manière à produire des deuxièmes données d'image ;
effectuer (S702) un prétraitement sur les premières données d'image et les deuxièmes données d'image ;
stocker (S703) les premières données d'image et deuxièmes données d'image prétraitées ;
coder (S704) les premières données d'image stockées et les deuxièmes données d'image stockées ;
effectuer (S705) un processus de conversion de données sur les deuxièmes données d'image codées sur la base des premières données d'image codées, le processus de conversion de données permettant d'obtenir une différence entre des valeurs de pixels correspondants des premières et des deuxièmes données d'image, de telle sorte que la quantité de données d'image puisse être minimisée ;
générer (S706) un fichier d'image tridimensionnelle composé d'une zone de données comportant les premières données d'image et les deuxièmes données d'image, qui ont subi le processus de conversion de données, d'une zone d'en-tête comportant des informations sur les premières données d'image, et d'une zone de métadonnées comportant des informations sur les deuxièmes données d'image, dans lequel les deuxièmes données d'image sont restaurées par un processus de conversion de données en utilisant des informations de conversion de données stockées dans la zone de métadonnées, et dans lequel un dispositif de régénération qui ne peut pas régénérer une image 3D se réfère à la zone d'en-tête et non à la zone de métadonnées afin de régénérer une image 2D conventionnelle.

15. Procédé selon la revendication 14, comprenant en outre les étapes suivantes :
analyser (S71) les informations sur les premières données d'image et les informations sur les deuxièmes données d'image de manière à extraire les premières données d'image et les deuxièmes données d'image ;
stocker (S722) les premières données d'image extraites et les deuxièmes données d'image extraites ;
décoder (S723) les premières données d'image stockées et les deuxièmes données d'image stockées ;
restaurer (S724) les deuxièmes données d'image décodées en utilisant des informations concernant la conversion de données ;
synthétiser et régénérer (S725) les premières données d'image et les deuxièmes données d'image restaurées sous la forme d'une image tridimensionnelle ; et
afficher (S726) l'image tridimensionnelle synthétisée et régénérée.
